# EUROPÄISCHE PATENTANMELDUNG

(11) **EP 3 670 048 A1**
(43) Veröffentlichungstag der Anmeldung: **24.06.2020**
(21) Anmeldenummer: 18215354.4
(22) Anmeldetag: 21.12.2018
(51) Int. Cl.: B23C 5/10

(54) **FRÄSWERKZEUG**

(71) Anmelder: CERATIZIT Balzheim GmbH & Co. KG, 88481 Balzheim (DE)
(72) Erfinder: WALCHER, Rainer, 88481 Balzheim (DE); WALCHER, Jochen, 88481 Balzheim (DE); WALCHER, Matthias, 88481 Balzheim (DE); RAPP, Oliver, 88481 Balzheim (DE)
(74) Vertreter: Ciesla, Dirk

(57) **Zusammenfassung**

Rotationswerkzeug (1), insbesondere Fräswerkzeug, wobei das Rotationswerkzeug (1) für eine Rotation in einer Rotationsrichtung (R) um eine Längsachse (L) vorgesehen ist,
das Rotationswerkzeug (1) umfassend:
eine Stirn (2), einen Schneidenabschnitt (3) und einen Schaftabschnitt (4),
eine Mehrzahl von sich spiralförmig entlang des Schneidenabschnitts (3) erstreckenden Stegen (8),
zwischen Stegen (8) verlaufende Spannuten (6), wobei
wenigstens eine Spannut (6) in radialer Richtung bis zu einem Kerndurchmesser (DK) eingeformt ist, welcher Kerndurchmesser (DK) entlang des Schneidenabschnitts (3) in Richtung Schaftabschnitt (4) zumindest abschnittsweise zunimmt, wobei die wenigstens eine Spannut (6) in einen Spanformbereich (61) und einen Spanabführbereich (62) unterteilbar ist, welche Bereiche (61, 62) in einem Querschnitt normal zur Längsachse (L) von einem Berührungspunkt (P) der Spannut (6) mit einem den Kerndurchmesser (DK) bildenden Inkreis voneinander getrennt sind, und wobei eine Kontur des Spanformbereichs (61) einen kleineren Krümmungsradius (RF) aufweist als eine Kontur des Spanabführbereichs (RA).

## Beschreibung

Die vorliegende Erfindung betrifft ein Fräswerkzeug mit den Merkmalen des Oberbegriffs von Anspruch 1.

Ein gattungsgemäßes Fräswerkzeug ist beispielsweise aus der AT14275 (U1) bekannt.

Aufgabe der Erfindung ist es, ein verbessertes Fräswerkzeug anzugeben. Insbesondere soll die Sicherheit gegen Bruch durch Betriebslasten erhöht werden.

Die Aufgabe wird gelöst von einem Fräswerkzeug mit den Merkmalen von Anspruch 1. Bevorzugte Weiterbildungen sind in den abhängigen Ansprüchen angegeben.
Indem wenigstens eine Spannut in radialer Richtung bis zu einem Kerndurchmesser eingeformt ist, welcher Kerndurchmesser entlang des Schneidenabschnitts in Richtung Schaftabschnitt zumindest abschnittsweise zunimmt, wobei die wenigstens eine Spannut in einen Spanformbereich und einen Spanabführbereich unterteilbar ist, welche Bereiche in einem Querschnitt normal zur Längsachse von einem Berührungspunkt der Spannut mit einem den Kerndurchmesser bildenden Inkreis voneinander getrennt sind, und wobei eine Kontur des Spanformbereichs einen kleineren Krümmungsradius aufweist als eine Kontur des Spanabführbereichs, wird ein besonders robustes Werkzeug erhalten.

Erreicht wird dies durch das synergistische Zusammenwirken der von den kennzeichnenden Merkmalen erzeugten Wirkungen:
durch die erfindungsgemäße Ausgestaltung der Spannutkontur, wonach eine Kontur des Spanformbereichs einen kleineren Krümmungsradius aufweist als eine Kontur des Spanabführbereichs, werden die Schnittkräfte gegenüber konventionellen Ausgestaltungen der Spannut reduziert. Insbesondere wird die Reibung der Späne entlang der Spannut reduziert.
Dadurch wirken geringere Torsionsmomente auf das Werkzeug.

Indem das Rotationswerkzeug einen entlang des Schneidenabschnitts in Richtung Schaftabschnitt zumindest abschnittsweise zunehmenden Kerndurchmesser aufweist, können die durch Schnittkräfte eingebrachten Torsionsmomente vom Werkzeug besser abgetragen werden.

Die Effekte bewirken zusammen, dass das erfindungsgemäße Werkzeug einen besonders hohen Widerstand gegen Bruch durch Betriebslasten aufweist.

Die wenigstens eine Spannut lässt sich in einen Spanformbereich und einen Spanabführbereich gliedern.
Der Spanformbereich schließt in Drehrichtung unmittelbar an eine Umfangsschneide an. Der Spanformbereich ist also jener Abschnitt der Spannut, in welchem der von der Umfangsschneide abgehobene Span den ersten Kontakt mit der als Spanfläche wirkenden Spannut erfährt und umgeformt wird.
Indem eine Kontur des Spanformbereichs einen kleineren Krümmungsradius - also eine stärkere Krümmung - aufweist als eine Kontur des Spanabführbereichs, erfährt der Span im Spanabführbereich eine geringere Umformung als im Spanformbereich. Dadurch treten auch geringere Umformkräfte auf, wodurch die Belastung des Werkzeugs verringert wird.

Die Angabe der Krümmungsradien ist jeweils als ein gemittelter Wert zu verstehen. Es kann also durchaus sein, dass ein lokaler Krümmungsradius des Spanabführbereichs kleiner ist als ein lokaler Krümmungsradius des Spanformbereichs. Gemittelt aber weist der Spanformbereich eine stärkere Krümmung auf als der Spanabführbereich. Wird beispielsweise ein Schmiegekreis in die Kontur des Spanformbereichs gefittet, weist dieser einen kleineren Radius auf als ein in die Kontur des Spanabführbereichs gelegter Schmiegekreis.

Bevorzugt sind mehrere Spannuten ausgebildet. Bevorzugt weisen sämtliche Spannuten eine erfindungsgemäße Ausgestaltung der Spannutkontur auf.

Bevorzugt ist vorgesehen, dass eine Länge des Spanformbereichs zwischen 30-50% einer Länge der gesamten Spannnutkontur beträgt, betrachtet in einem Querschnitt normal zur Längsachse.
Diese Längenverhältnisse haben sich als besonders günstig erwiesen.
Bei einem zu kurzen Spanformbereich, beispielsweise unter 20 % der Länge der gesamten Spannnutkontur, wird dieser Bereich - an dem der Span abläuft - stark belastet.
Umgekehrt bewirkt ein zu langer Spanformbereich eine unzureichende Spanformung.

Die Krümmung des Spanabführbereichs kann gegenüber der Krümmung des Spanformbereichs das Vorzeichen wechseln.
Die Krümmung im Spanabführbereich kann zumindest abschnittsweise Null sein.
Der Berührungspunkt der Spannnutkontur mit dem Kerndurchmesser kann ein Wendepunkt der die Spannnutkontur beschreibenden Kurve sein.

Ein Schmiegekreis des Spanformbereichs weist bevorzugt einen Radius auf, welcher mit dem Werkzeugdurchmesser skaliert. Die Abhängigkeit des Radius des Schmiegekreises des Spanformbereichs kann vereinfacht durch eine lineare Funktion angegeben werden, mit Radius des Schmiegekreises des Spanformbereichs = (a x Werkzeugdurchmesser DW) mit a zwischen 0,18 und 0,28, weiter bevorzugt a zwischen 0,20 und 0,26, besonders bevorzugt a = 0,23.
In anderen Worten beträgt der Krümmungsradius des Spanformbereichs bevorzugt zwischen 18% und 28% des Werkzeugdurchmessers.

Bevorzugt ist das Werkzeug als vierschneidiges Fräswerkzeug ausgebildet.

Es kann vorgesehen sein, dass die Spannuten gleichgeteilt, das heißt, entlang eines Umfangs des Werkzeugs gleichmäßig voneinander beanstandet sind. Alternativ ist das Werkzeug ungleich geteilt, das heißt, die Spannuten entlang eines Umfangs des Werkzeugs nicht in gleichen Abständen voneinander ausbildet sind. Dabei kann vorgesehen sein, dass die Abstände von Spannuten paarweise gleich sind.

Erfindungsgemäß nimmt der Kerndurchmesser entlang des Schneidenabschnitts in Richtung Schaftabschnitt zumindest abschnittsweise zu. Gemeint ist eine Zunahme des Kerndurchmesser (auch als Kernanstieg bezeichnet) im schneidenden Bereich des Werkzeugs - im Gegensatz zu einem konventionellen Auslaufen des Kerndurchmessers auf einen Schaftabschnitt.

Es kann vorgesehen sein, dass der Kerndurchmesser ausgehend von der Stirn in Richtung Schaftabschnitt kontinuierlich zunimmt. Beispielsweise kann der Kerndurchmesser von der Stirn in Richtung Schaftabschnitt linear ansteigen, um beim Schaftabschnitt den Werkzeugdurchmesser anzunehmen.

Bevorzugt ist vorgesehen, dass der Kerndurchmesser ausgehend von der Stirn in Richtung Schaftabschnitt entlang einer ersten Strecke im Wesentlichen konstant ist, um entlang wenigsten einer zweiten Strecke zuzunehmen. In anderen Worten besteht bevorzugt ein Abschnitt mit zylindrischer Kernform. Die Länge der ersten Strecke ausgehend von der Stirn mit im Wesentlichen konstantem Kerndurchmesser beträgt bevorzugt bis 2 x DW, weiter bevorzugt 1,2 bis 1,8 x DW, besonders bevorzugt 1,4 bis 1,6 x DW, mit DW ist der Werkzeugdurchmesser (auch: Schneidendurchmesser) gekennzeichnet. Eine Länge des Schneidenabschnitts beträgt bevorzugt etwa 2,5 mal dem Werkzeugdurchmesser DW, besonders bevorzugt um 2 x Werkzeugdurchmesser DW.

Es kann vorgesehen sein, dass der Kerndurchmesser entlang der zweiten Strecke linear zunimmt.
Bevorzugt schließt also an den Abschnitt mit zylindrischer Kernform, also mit konstanten Kerndurchmesser, ein zweiter Abschnitt an, in welchem der Kerndurchmesser in Wesentlichen linear zunimmt.

Es kann vorgesehen sein, dass der Kerndurchmesser entlang der zweiten Strecke linear bis zum Schaftabschnitt zunimmt, um dort den Werkzeugdurchmesser zu erreichen.

Es kann vorgesehen sein, dass der Kerndurchmesser entlang einer zweiten Strecke gemäß einer ersten Funktion zunimmt und entlang einer dritten Strecke gemäß einer zweiten Funktion zunimmt. In anderen Worten kann vorgesehen sein, dass der Kernanstieg in zwei Abschnitten erfolgt.

Dabei kann vorgesehen sein, dass an den zweiten Abschnitt mit linearem Kernanstieg ein dritter Abschnitt - der Auslaufbereich - anschließt, in welchem der Kerndurchmesser nicht-linear zunimmt und schließlich auf den Werkzeugdurchmesser ausläuft.

Der Steigungswinkel der ersten Funktion - also der Kernanstieg entlang der zweiten Strecke mit linearem Verlauf - beträgt bevorzugt zwischen 5° und 15°, weiter bevorzugt zwischen 7° und 12°.

Die den Kernanstieg entlang des dritten Abschnitts beschreibende zweite Funktion ist bevorzugt eine quadratische Funktion. Der Kerndurchmesser nimmt entlang der dritten Strecke entlang einer Kurve mit einem Krümmungsradius zu. Damit wird ein hinsichtlich der mechanischen Eigenschaften günstiger sanfter Auslauf über einen Radius realisiert. Bevorzugt ist der Krümmungsradius der dritten Strecke über ein quadratisches Polynom vom Werkzeugdurchmesser beschreibbar.

Bevorzugt ist das Werkzeug aus einem Verbundwerkstoff umfassend wenigstens einen Hartstoff und wenigstens eine Binderphase ausgebildet. Insbesondere ist das Werkzeug aus Hartmetall gefertigt. Unter Hartmetall (engl. *cemented carbide*) wird vorliegend ein Verbundwerkstoff verstanden, bei dem harte Teilchen, die insbesondere durch Karbide, Karbonitride und/oder Oxokarbonitride der Elemente der Gruppen IVb bis VIb des Periodensystems der Elemente gebildet sein können, in einer duktilen metallischen Matrix eingebettet sind, die insbesondere aus Co, Ni, Fe oder einer Legierung von diesen gebildet sein kann. In den meisten Fällen sind die harten Teilchen dabei zumindest überwiegend durch Wolframkarbid gebildet und die metallische Matrix besteht im Wesentlichen aus Kobalt.

Bevorzugt ist das Werkzeug als Schaftfräser aus Vollhartmetall ausgebildet. Das Werkzeug ist bevorzugt einstückig ausgeführt. Alternativ kann das Werkzeug - beispielsweise durch Zusammensintern - aus zwei oder mehreren Abschnitten gefügt sein.

Es kann vorgesehen sein, dass im Inneren des Werkzeugs wenigsten ein Kühlmittelkanal ausgebildet ist. Der Kühlmittelkanal ist dazu ausgebildet, Kühl- / Schmiermittel an den Ort der Zerspanung zu fördern. Dadurch werden die im Eingriff stehenden Schneiden gekühlt und geschmiert. Zusätzlich trägt das Kühl- / Schmiermittel zu einem Abtransport von Spänen bei.
Das Vorliegen von Kühlmittelkanälen im Inneren eines Werkezugs bedeutet in der Regel eine mechanische Schwächung desselben, da der tragende Querschnitt reduziert wird und auch Spannungsspitzen durch eine Kerbwirkung der Kühlmittelkanäle auftreten können.
Im Zusammenhang mit der vorliegenden geometrischen Ausgestaltung des Werkzeugs, nämlich dem Profil der Spannuten und dem Kernanstieg, ist diese Problematik gemildert, da geringere Kräfte auf das Werkzeug wirken und mehr tragender Querschnitt zu Verfügung steht.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen:
- Fig. 1:: ein erfindungsgemäßes Rotationswerkzeug in einer Seitenansicht
- Fig. 2a-d:: Schnitte normal zu einer Längsachse des Werkzeugs
- Fig. 3: einen Verlauf des Krümmungsradius des Spanformbereichs in Abhängigkeit vom Kerndurchmesser
- Fig. 4a, 4b: schematische Darstellungen des Verlaufs des Kerndurchmessers
- Fig. 5: einen Verlauf des Krümmungsradius des Auslaufbereichs in Abhängigkeit vom Kerndurchmesser
- Fig. 6a,6b: weitere Ausführungsbeispiele des Rotationswerkzeugs

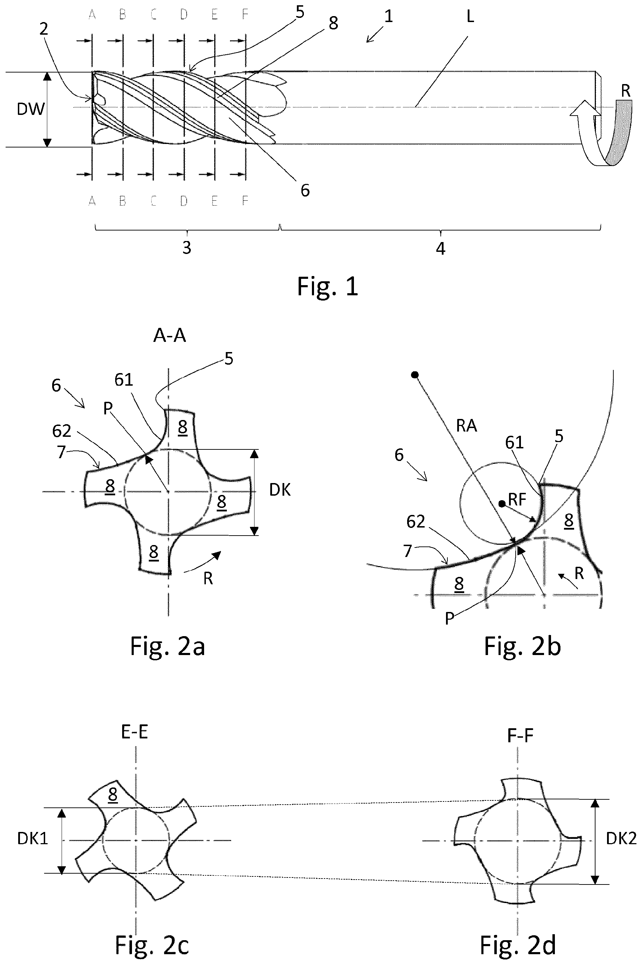

Figur 1 zeigt ein erfindungsgemäßes Rotationswerkzeug 1 in einer Seitenansicht.
Das Werkzeug 1 ist entlang seiner Längsachse L in einer Rotationsrichtung R drehbar. Das vorliegende Werkzeug 1 ist, wie aus der Zeichnung ersichtlich, für einen rechtsdrehenden Betrieb ausgelegt. Die Erfindung ist freilich auch für linksdrehende Werkzeuge anwendbar.
Das Werkzeug 1 weist einen Werkzeugdurchmesser DW und einen Kerndurchmesser DK auf. Wie im Folgenden noch näher ausgeführt werden wird, ist der Kerndurchmesser DK über die Länge des Werkzeugs 1 veränderlich ausgeführt.
Das Werkzeug 1 weist eine Stirn 2 auf, an welcher Stirnschneiden ausgebildet sein können. Das Werkzeug ist unterteilbar in einen Schneidenabschnitt 3, an welchem eine Mehrzahl an spiralförmig verlaufenden Schneiden 5 an Stegen 8 ausgebildet sind und einen Schaftabschnitt 4, welcher keine Schneiden trägt und welcher zur Einspannung des Werkzeugs 1 in einen Werkzeughalter (nicht gezeigt) dient. Eine Länge des Schneidenabschnitts 3 beträgt bevorzugt rund 2,5 mal dem Werkzeugdurchmesser DW, besonders bevorzugt um 2,0 mal dem Werkzeugdurchmesser DW.
Zwischen den Stegen 8 sind Spannuten 6 in das Werkzeug 1 eingeformt.
Im vorliegenden Ausführungsbeispiel ist das Werkzeug 1 als vierschneidiges Fräswerkzeug ausgebildet. Es weist also vier Spannuten 6, vier Stege 8 und vier Schneiden 5 auf.
Eingetragen entlang der Längsachse sind axiale Positionen A-A bis F-F, an welchen im Folgenden auszugsweise Schnitte gelegt und diskutiert werden.

Figuren 2a bis 2d zeigen Schnitte durch das Werkzeug 1, wobei die Schnittebenen normal zur Längsachse L bei verschiedenen, aus Figur 1 entnehmbaren Positionen entlang der Längsachse L gewählt sind.

Figur 2a zeigt den Schnitt A-A.

Zwischen den Stegen 8 sind Spannuten 6 radial bis zu einem Kerndurchmesser DK eingeformt. Der Kerndurchmesser ist bestimmt durch den Durchmesser des größten Inkreises im jeweiligen Querschnitt des Werkzeugs 1.

Eine Spannut 6 lässt sich gedanklich in einen Spanformbereich 61 und einen Spanabführbereich 62 unterteilen, welche Bereiche 61, 62 von einem Berührungspunkt P der Spannut 6 mit dem den Kerndurchmesser DK bildenden Inkreis voneinander getrennt sind. Anders ausgedrückt, stellt der Berührungspunkt P den radial betrachtet am weitesten innen liegenden Punkt der Spannut 6 dar. Der Spanformbereich 61 schließt dabei unmittelbar an die Schneide 5 an.
In Figur 2b sind die Verhältnisse an einer Spannut 6 von Figur 2a im Detail dargestellt.
Eine Spannut 6 weist eine zumindest abschnittsweise von Kreisabschnitten gebildete Spannnutkontur 7 auf. Eine Gesamtlänge der Spannnutkontur 7 setzt sich aus den Längen des Spanformbereichs 61 und des Spanabführbereichs 62 zusammen. Der Berührungspunkt P kann ein Wendepunkt der die Spannnutkontur 7 beschreibenden Funktion sein.
Die Gestalt der Spannnutkontur 7 kann sich aus mehreren Kurvenabschnitten zusammensetzen. Es wird für die Beschreibung der Erfindung vereinfachend angenommen, dass sich für den Spanformbereich 61 und den Spanabführbereich 62 jeweils ein Schmiegekreis definieren lässt, der die jeweilige Krümmung approximiert.
Eine Krümmung des Spanformbereichs 61 lässt sich demnach mit einem Schmiegekreis mit dem Krümmungsradius RF annähern.
Eine Krümmung des Spanabführbereichs 62 lässt sich mit einem Schmiegekreis mit dem Krümmungsradius RA annähern.
Der Krümmungsradius RF des Spanformbereichs 61 ist kleiner als der Krümmungsradius RA des Spanabführbereichs 62. Anders ausgedrückt ist die Krümmung des Spanformbereichs 61 größer als die des Spanabführbereichs 62.

Die Angabe der Krümmungsradien ist jeweils als ein gemittelter Wert zu verstehen. Es kann also durchaus sein, dass ein lokaler Krümmungsradius des Spanabführbereichs kleiner ist als ein lokaler Krümmungsradius des Spanformbereichs. Gemittelt aber weist der Spanformbereich eine stärkere Krümmung auf als der Spanabführbereich.

Die erfindungsgemäße Ausgestaltung der Spannut 6 bewirkt, dass eine Umformung eines Spans im Wesentlichen entlang des Spanformbereichs 61 stattfindet, während der Span im Spanabführbereich 62 im Wesentlichen ohne weitere Umformung ablaufen kann.
Somit beschränkt sich der Bereich der Umformung des Spans im Wesentlichen auf den Spanformbereich 61. Die aufzubringenden Umformkräfte bei dem erfindungsgemäßen Werkzeug sind gering. Dadurch wirken geringere Torsionsmomente auf das Werkzeug.

Bevorzugt beträgt die Länge des Spanformbereichs 61 zwischen 30-50% der Gesamtlänge der Spannnutkontur 7. In anderen Worten beträgt eine Länge des Spanabführbereichs 62 zwischen 50% und 70% der Länge der gesamten Spannnutkontur 7.

Figur 2c zeigt einen Schnitt entlang E-E aus Figur 1, Figur 2d zeigt einen Schnitt entlang F-F aus Figur 1.
Anhand der Figuren 2c und 2d wird verdeutlicht, dass der Kerndurchmesser DK in diesem Ausführungsbeispiel von einem ersten Wert des Kerndurchmessers DK1 im Schnitt E-E gemäß Figur 2c zu einem zweiten Wert des Kerndurchmessers DK2 im Schnitt F-F gemäß Figur 2d ansteigt.
Im vorliegenden Ausführungsbeispiel ist der Kernanstieg - also die Zunahme des Kerndurchmessers DK - so ausgebildet, dass der Kerndurchmesser von der Stirn 2 bis zur axialen Position E-E gemäß Figur 1 konstant ist, um danach in Richtung Schaftabschnitt 4 anzusteigen.
Der Kernanstieg bewirkt, dass auftretende Torsionsmomente von einem größeren Querschnitt abgetragen werden.
Im Zusammenwirken mit der beschriebenen Ausgestaltung einer Spannut wird damit ein besonders robustes Werkzeug erhalten.

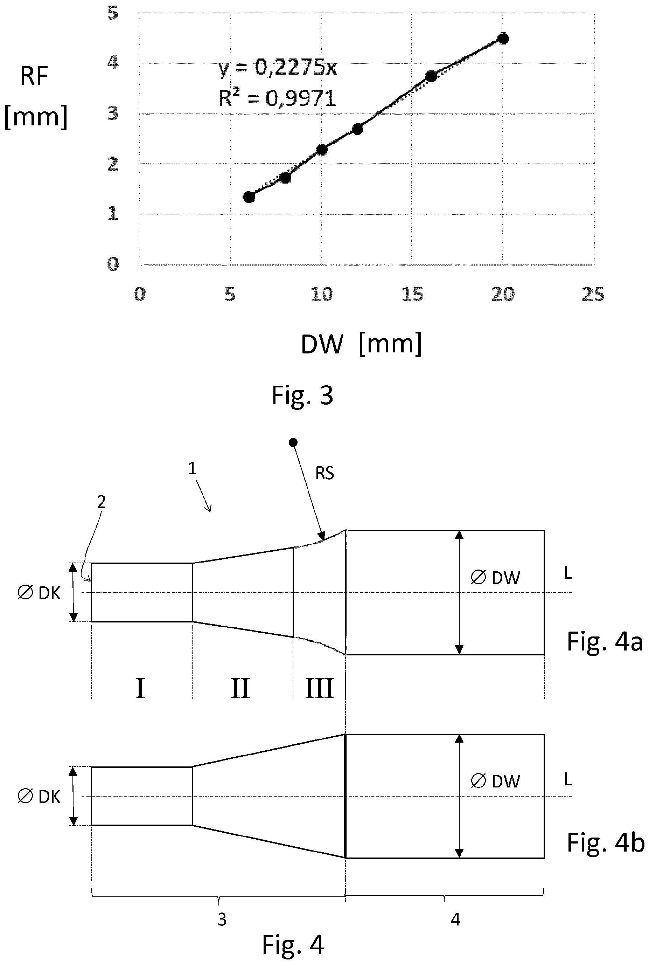

Figur 3 zeigt einen Verlauf des Krümmungsradius RF des Spanformbereichs 61 aufgetragen über dem Werkzeugdurchmesser DW.
Aufgetragen sind die Krümmungsradien RF in Millimeter [mm] von sechs verschiedenen Werkzeugen mit Werkzeugdurchmessern DW in Millimeter [mm] gemäß der folgenden Tabelle:

**Tabelle 1: Ausführungsbeispiele von Werkzeugen verschiedener Werkzeugdurchmesser**

| Werkzeug Beispiel Nr. | Werkzeugdurchmesser DW [mm] | Krümmungsradius RF des Spanformbereichs [mm] |
|---|---|---|
| 1 | 6 | 1,35 |
| 2 | 8 | 1,75 |
| 3 | 10 | 2,3 |
| 4 | 12 | 2,7 |
| 5 | 16 | 3,75 |
| 6 | 20 | 4,5 |

Der Betrag des Krümmungsradius RF des Spanformbereichs 61 skaliert mit dem Werkzeugdurchmesser DW. Bevorzugt stehen der Krümmungsradius RF des Spanformbereichs 61 und der Werkzeugdurchmesser DW in einem linearen oder annähernd linearen Verhältnis.
Wie aus Figur 3 ersichtlich, folgt - für die Auswahl an Werkzeugen nach Tabelle 1 - der Krümmungsradius RF dem Werkzeugdurchmesser DW gemäß der Funktion 0,2275x mit einem Korrelationskoeffizienten von R² = 0,9971. Anders ausgedrückt, beträgt der Krümmungsradius RF hier rund 23% des Werkzeugdurchmessers DW.
Allgemein hat sich es als günstig erwiesen, wenn der Krümmungsradius des Spanformbereichs bevorzugt zwischen 18% und 28% des Werkzeugdurchmessers beträgt. Die obig diskutierte Serie von Werkzeugen mit einem Verhältnis von 23% stellt einen weiter bevorzugten Bereich dar.

Figur 4a zeigt einen schematischen Verlauf des Kerndurchmessers DK über der Längsachse L eines Werkzeugs 1 nach einem weiteren, bevorzugten Ausführungsbeispiel. Dargestellt in dieser vereinfachten schematischen Zeichnung ist also der Verlauf des Kerndurchmessers DK eines Werkzeugs entlang des Schneidenbereichs 3 (Schneiden nicht gezeigt) sowie der Schaftabschnitt 4. Die Länge des Schneidenbereichs 3 beträgt beispielsweise 2,5 x Werkzeugdurchmesser DW.
In diesem bevorzugten Ausführungsbeispiel ist der Kerndurchmesser DK entlang einer ersten Strecke I / einem ersten Abschnitt I im Wesentlichen konstant. In anderen Worten weist der Kern entlang der ersten Strecke I eine zylindrische Kernform auf.
Die Länge dieser ersten Strecke I beträgt bevorzugt ≤ 2 x DW, weiter bevorzugt ≤ 1,2 bis 1,8 x DW, besonders bevorzugt 1,4 bis 1,6 x D, mit DW dem Werkzeugdurchmesser.
Entlang einer daran anschließenden zweiten Strecke II nimmt der Kerndurchmesser DK gemäß einer ersten Funktion linear zu.
Der Steigungswinkel der ersten Funktion - also der Kernanstieg entlang der zweiten Strecke mit linearem Verlauf - beträgt bevorzugt zwischen 5° und 15°, weiter bevorzugt zwischen 7° und 12°.

Weiters ist vorgesehen, dass an diesen zweiten Abschnitt mit linearem Kernanstieg ein dritter Abschnitt III, der Auslaufbereich, anschließt, in welchem der Kerndurchmesser DK nicht-linear zunimmt und schließlich auf den Werkzeugdurchmesser DW ausläuft. Die den Kernanstieg entlang des dritten Abschnitts beschreibende zweite Funktion ist bevorzugt eine quadratische Funktion. Damit wird ein sanfter Auslauf über einen Radius RS realisiert. Bevorzugt ist der Krümmungsradius RS der dritten Strecke über ein quadratisches Polynom in Abhängigkeit vom Werkzeugdurchmesser DW beschreibbar.
In anderen Worten ist in diesem Ausführungsbeispiel vorgesehen, dass der Kernanstieg in zwei Abschnitten erfolgt.
Es kann bevorzugt vorgesehen sein, dass eine auf die Längsachse L projizierte Länge des zweiten Abschnitts mit linearem Kernanstieg zwischen ein- und zweimal der Länge des dritten Abschnitts beträgt.

Figur 4b zeigt einen schematischen Verlauf des Kerndurchmessers DK über der Längsachse L eines Werkzeugs 1 nach einem weiteren Beispiel. Hier schließt direkt an den zylindrischen Abschnitt I ein linearer Anstieg an, der sich bis zum Werkzeugdurchmesser DW erstreckt.

Alternativ kann ein Kernanstieg an der Stirn beginnen und sich bis zum Werkzeugdurchmesser DW erstrecken.

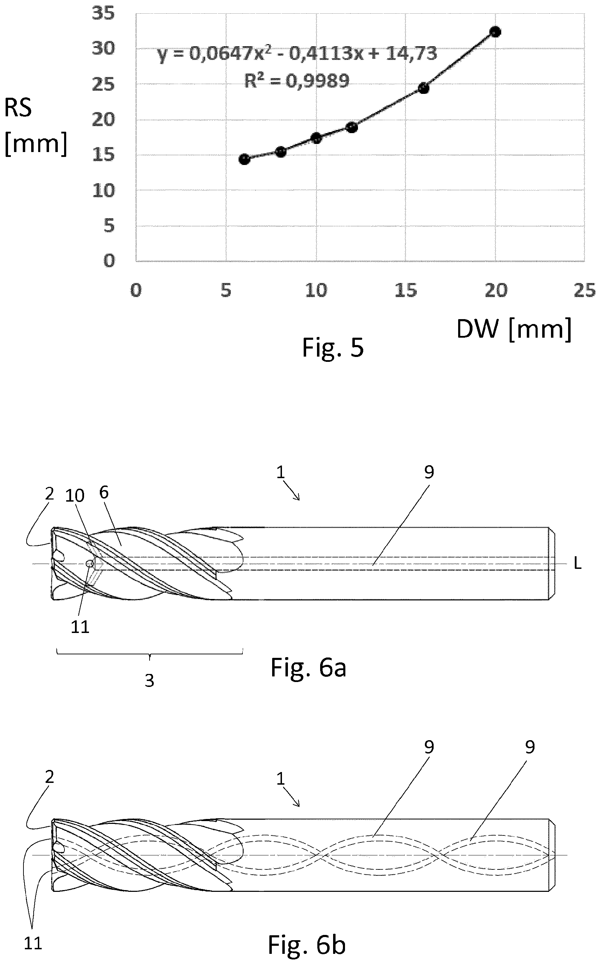

Figur 5 zeigt einen Verlauf des Krümmungsradius RS des dritten Abschnitts III (dem Auslaufbereich) aufgetragen für verschiedene Werkzeugdurchmesser DW. Aufgetragen sind Krümmungsradien RS in Millimeter [mm] von sechs verschiedenen Werkzeugen mit Werkzeugdurchmessern DW in Millimeter [mm] gemäß der folgenden Tabelle:

**Tabelle 2: Ausführungsbeispiele von Werkzeugen verschiedener Werkzeugdurchmesser und Krümmungsradien RS des Auslaufbereichs**

| Werkzeug Beispiel Nr. | Werkzeugdurchmesser DW [mm] | Krümmungsradius RS des Auslaufbereichs [mm] |
|---|---|---|
| 1 | 6 | 14,5 |
| 2 | 8 | 15,5 |
| 3 | 10 | 17,5 |
| 4 | 12 | 19 |
| 5 | 16 | 24,5 |
| 6 | 20 | 32,5 |

Der Krümmungsradius RS des Auslaufbereichs lässt sich über eine quadratische Gleichung in Abhängigkeit vom Werkzeugdurchmesser DW beschreiben. In der ausgewählten Serie von Werkzeugen folgt der Krümmungsradius RS der Funktion RS = 0,0647x² - 0,4113x + 14,73 mit einem Korrelationskoeffizienten R² = 0,9989.
Diese Funktion ist keineswegs als beschränkend aufzufassen, sondern stellt die Abhängigkeit des Krümmungsradius RS vom Werkzeugdurchmesser DW für diese ausgewählte Serie an Werkzeugen dar.
Alternativ wäre es möglich, den Krümmungsradius RS als lineare Funktion des Werkzeugdurchmessers DW anzugeben.

Figuren 6a und 6b zeigen weitere Ausführungsbeispiele des Rotationswerkzeugs 1. In dem Beispiel gemäß Figur 6a ist ein gerade verlaufender innenliegender Kühlmittelkanal 9 vorgesehen. Der Kühlmittelkanal 9 verläuft mittig entlang der Längsachse L. Im Schneidenabschnitt 3 sind sogenannte Y-Bohrungen 10 eingebracht derart, dass die Bohrungen 10 den Kühlmittelkanal 9 treffen und auf diese Weise Mündungen 11 für Kühl-/ Schmiermittel in den Spannuten 6 gebildet werden. Das Kühl-/ Schmiermittel sorgt für Kühlung und Schmierung des Werkzeugs 1 und unterstützt darüber hinaus den Spanabtransport.

In dem Beispiel gemäß Figur 6b sind verdrallt verlaufende Kühlmittelkanäle 9 ausgebildet. Die Kühlmittelkanäle 9 treten in diesem Fall über Mündungen 11 an der Stirn 2 aus. Auf diese Weise können insbesondere an der Stirn 2 ausgebildete Schneiden gekühlt werden.

### Liste der verwendeten Bezugszeichen:

- 1: Rotationswerkzeug
- 2: Stirn
- 3: Schneidenabschnitt
- 4: Schaftabschnitt
- 5: Schneide
- 6: Spannut
- 61: Spanformbereich
- 62: Spanabführbereich
- 7: Spannnutkontur
- 8: Steg
- 9: Kühlmittelkanal
- 10: Bohrung
- 11: Mündung
- DK: Kerndurchmesser
- DW: Werkzeugdurchmesser
- RA: Krümmungsradius des Spanabführbereichs
- RF: Krümmungsradius des Spanformbereichs
- RS: Krümmungsradius des Auslaufbereichs

## Patentansprüche

1. Rotationswerkzeug (1), insbesondere Fräswerkzeug, wobei das Rotationswerkzeug (1) für eine Rotation in einer Rotationsrichtung (R) um eine Längsachse (L) vorgesehen ist,
das Rotationswerkzeug (1) umfassend:
eine Stirn (2), einen Schneidenabschnitt (3) und einen Schaftabschnitt (4), eine Mehrzahl von sich spiralförmig entlang des Schneidenabschnitts (3) erstreckenden Stegen (8),
zwischen Stegen (8) verlaufende Spannuten (6),
**dadurch gekennzeichnet, dass**
wenigstens eine Spannut (6) in radialer Richtung bis zu einem Kerndurchmesser (DK) eingeformt ist, welcher Kerndurchmesser (DK) entlang des Schneidenabschnitts (3) in Richtung Schaftabschnitt (4) zumindest abschnittsweise zunimmt, wobei die wenigstens eine Spannut (6) in einen Spanformbereich (61) und einen Spanabführbereich (62) unterteilbar ist, welche Bereiche (61, 62) in einem Querschnitt normal zur Längsachse (L) von einem Berührungspunkt (P) der Spannut (6) mit einem den Kerndurchmesser (DK) bildenden Inkreis voneinander getrennt sind, und wobei eine Kontur des Spanformbereichs (61) einen kleineren Krümmungsradius (RF) aufweist als eine Kontur des Spanabführbereichs (RA).

2. Rotationswerkzeug (1) nach Anspruch 1, wobei eine Länge des Spanformbereichs (61) zwischen 30-50% einer Länge einer gesamten Spannnutkontur (7) beträgt, betrachtet in einem Querschnitt normal zur Längsachse (L).

3. Rotationswerkzeug (1) nach einem der vorangegangenen Ansprüche, wobei das Rotationswerkzeug (1) als vierschneidiges Fräswerkzeug ausgebildet ist.

4. Rotationswerkzeug (1) nach einem der vorangegangenen Ansprüche, wobei die Spannuten (6) entlang eines Umfangs des Werkzeugs (1) gleichmäßig voneinander beanstandet sind.

5. Rotationswerkzeug (1) nach einem der vorangegangenen Ansprüche, wobei der Kerndurchmesser (DK) ausgehend von der Stirn (2) in Richtung Schaftabschnitt (4) bis zum Erreichen eines Werkzeugdurchmessers (DW) linear zunimmt.

6. Rotationswerkzeug (1) nach einem Ansprüche 1 bis 4, wobei der Kerndurchmesser (DK) ausgehend von der Stirn (2) in Richtung Schaftabschnitt (4) entlang einer ersten Strecke im Wesentlichen konstant ist, um entlang wenigstens einer zweiten Strecke zuzunehmen.

7. Rotationswerkzeug (1) nach Anspruch 6, wobei der Kerndurchmesser (DK) entlang der zweiten Strecke im Wesentlichen linear zunimmt.

8. Rotationswerkzeug (1) nach Anspruch 6 oder 7, wobei der Kerndurchmesser (DK) entlang der zweiten Strecke gemäß einer ersten Funktion zunimmt und entlang einer dritten Strecke gemäß einer zweiten Funktion zunimmt.

9. Rotationswerkzeug (1) nach Anspruch 8, wobei der Kerndurchmesser (DK) entlang der dritten Strecke entlang einer Kurve mit einem Krümmungsradius (RS) zunimmt.

10. Rotationswerkzeug (1) nach einem der vorangegangenen Ansprüche, wobei das Werkzeug (1) einstückig ausgebildet ist.

11. Rotationswerkzeug (1) nach einem der vorangegangenen Ansprüche, wobei das Werkzeug (1) aus Hartmetall gefertigt ist.

12. Rotationswerkzeug (1) nach einem der vorangegangenen Ansprüche, wobei im Inneren des Werkzeugs (1) wenigsten ein Kühlmittelkanal (9) ausgebildet ist.
